(19) **Europäisches Patentamt**
**European Patent Office**
**Office européen des brevets**

(11) **EP 1 367 831 B1**

(12) **EUROPEAN PATENT SPECIFICATION**

(45) Date of publication and mention
of the grant of the patent:
**12.12.2012 Bulletin 2012/50**

(51) Int Cl.:
**H04N 7/24** (2011.01)

(21) Application number: **03101367.5**

(22) Date of filing: **15.05.2003**

(54) **Method and device for fragmenting multimedia data**

Verfahren und Vorrichtung zur Fragmentierung von Multimedia-Daten

Procédé et dispositif de fragmentation de données multimédia

(84) Designated Contracting States:
**DE FR GB**

(30) Priority: **30.05.2002 FR 0206878**

(43) Date of publication of application:
**03.12.2003 Bulletin 2003/49**

(73) Proprietor: **Thomson Licensing**
**92130 Issy-les-Moulineaux (FR)**

(72) Inventors:
• **Stauder, Jürgen**
**92648 Boulogne Billancourt Cedex (FR)**
• **Robert, Philippe**
**92648 Boulogne Billancourt Cedex (FR)**

(74) Representative: **Ruellan-Lemonnier, Brigitte et al**
**Technicolor**
**1-5 rue Jeanne d'Arc**
**92130 Issy-les-Moulineaux (FR)**

(56) References cited:
**WO-A-01/41156        US-B1- 6 223 183**
**US-B1- 6 326 965**

• **BENITEZ A B ET AL: "Object-based multimedia content description schemes and applications for MPEG-7" September 2000 (2000-09), SIGNAL PROCESSING. IMAGE COMMUNICATION, ELSEVIER SCIENCE PUBLISHERS, AMSTERDAM, NL, VOL. 16, NR. 1-2, PAGE(S) 235-269 , XP004216278 ISSN: 0923-5965 * paragraphs [0001], [0005] ***
• **SIGNES J ET AL: "MPEG-4'S BINARY FORMAT FOR SCENE DESCRIPTION" SIGNAL PROCESSING. IMAGE COMMUNICATION, ELSEVIER SCIENCE PUBLISHERS, AMSTERDAM, NL, vol. 15, no. 4/5, January 2000 (2000-01), pages 321-345, XP000989994 ISSN: 0923-5965**

**Description**

The present invention pertains to a method and to a device for fragmenting multimedia data, in particular data associated with navigation nodes.

The throughput of data transmitted via telecommunication networks, such as the Internet network, and the diversity of these data are constantly increasing, a growing number of terminals and of servers using these networks to transmit or receive data of diverse natures, for example, relating to audio and/or video documents, to programs, to texts, to graphical data coding two- or three-dimensional images, or else to texts with hyperlinks allowing access to new data.

When documents comprise data of various natures, these documents and these data are referred to hereinbelow as multimedia.

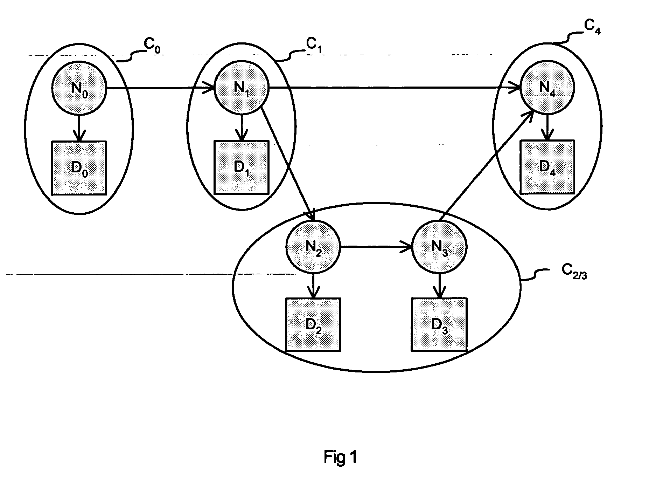

The operations performed with data $D_0$, $D_1$, $D_2$, $D_3$ and $D_4$ (Figure 1) such as their coding/decoding, their transmission, their reception and/or their display are simpler and faster to carry out when these data are grouped or fragmented into cells $C_0$, $C_1$, $C_{2/3}$ and $C_4$.

Such a fragmentation makes it possible, for example, to perform the multiplexing of these data during their transmission, or to carry out their processing in tandem with their reception.

Stated otherwise, a fragmentation of the data into cells optimizes the use of the limited, in terms of memory capacity and computational capacity, of the various terminals and servers processing these data, as well as the use of the limited, for example in terms of bandwidth, transmission resources of the networks.

Moreover, it is known to associate navigation nodes $N_0$, $N_1$, $N_2$, $N_3$ and $N_4$ with data $D_0$, $D_i$, $D_2$, $D_3$ and $D_4$ so as to determine the order of access to the latter. For this purpose, each node $N_I$ comprises means for identifying data $D_i$ which are associated therewith, as well as means for identifying at least one next node $N_{(i+1)}$. Stated otherwise, access to a node $N_{(i+1)}$ and to the data $D_{(i+1)}$ associated therewith is carried out commencing with a previous node $N_i$.

As represented in Figure 1, each cell $C_i$ can indude the node(s) $N_i$ associated with the data $D_i$ included in this cell $C_i$.

A navigation graph can be composed of successive nodes such that a node $N_i$ is connected to a single previous node $N_{i-1}$ and to a single next node $N_{i+1}$. In this case, such a graph is said to be linear or one-dimensional.

Conversely, a graph can comprise nodes, such as the nodes $N_1$ or $N_4$, connected to several nodes. The navigation graph is then said to be nonlinear or multidimensional. In this case, two nodes $N_2$ and $N_4$ may be next nodes of one and the same node $N_1$ (respectively two nodes $N_1$ and $N_3$ may be previous nodes of one and the same node $N_4$). Moreover, the node $N_1$ being the next to node No, the nodes $N_2$, $N_4$ and $N_0$ are referred to hereinbelow as neighbouring nodes of $N_1$.

When distinct cells $C_i$ and $C_k$ comprise identical or redundant data $D_i$ and $D_k$, these cells $C_i$ and $C_k$ are said to be redundant. Redundant data such as these are frequently used in multimedia documents where identical data are used for various applications. For example, in an electronic book, one and the same image may be used for the display of various different pages, in which case the data relating to the image are present in each of the cells relating to these pages.

In another example relating to graphical data, data coding an object may be present in cells specific to distinct viewpoints of a scene comprising this object.

However, it is advisable to limit the generation of redundant cells during the fragmentation of data so as to allow faster and simpler processing of the data since the processing of redundant cells causes the repeated processing of identical data. For example, the transmitting of redundant cells requires the repeated transmitting of redundant data.

Stated otherwise, to optimize the fragmentation of multimedia data, it is advisable to group the identical or redundant data into one and the same cell.

To fragment a set of data into cells, it is known to form data cells by considering the quantity of data included in a cell as fragmentation parameter. Stated otherwise, a data cell is generated by grouping neighbouring data into a cell until the latter reaches a given size. Such a method has the drawback of not optimizing the fragmentation of the data in such a way as to avoid the formation of redundant cells.

It is also known to use navigation nodes associated with these data and to consider the nature and/or the application of these data. For this purpose, each node $N_i$ comprises means determining the nature and/or the application of the data associated therewith in such a way as to allow their fragmentation by grouping the data relating to one and the same nature or to one and the same application. Thus, when a document comprises several pages of text, the text data $D_i$ relating to these pages may be fragmented in such a way that the data $D_i$ of a cell $C_k$ are specific to a page k of the document.

Thereupon, the transmission of a cell $C_k$ will comprise the data $D_k$ relating to the page k of the document. In this case, for example, the reception of the first data cells $C_1$, $C_2$ ... and $C_k$ allows a user to process pages 1,2,... k while the succeeding pages are being transmitted.

According to another example, data coding images in three dimensions are generally fragmented as a function of the viewpoints relating to a scene and/or to an object. For example, a cell $C_k$ may constitute a representation of a scene according to a first viewpoint, while a next cell $C_{k+1}$, that is to say one which is accessible from the cell $C_k$, may comprise data relating to a second viewpoint dose to the first so that the switch from the first cell $C_k$ to the second cell $C_{k+1}$ corresponds to a displacement of the viewpoint.

According to another example, when the data code a residence comprising several rooms, the data $D_i$ of a cell $C_k$ may relate to a room of this residence, while the data $D_n$ of a next cell $C_{k+1}$ may relate to a neighbouring room. In this case, the switch from a cell $C_k$ to a next cell $C_{k+1}$ will be representative of the switch from one room to a neighbouring room.

However, these fragmentation methods take into account the nature and/or the application of the fragmented data and they therefore cannot be used to fragment multimedia data, of various natures, for which diverse applications, such as graphics and audio, are required simultaneously.

To perform the fragmentation of data relating to images in three dimensions, known fragmentation algorithms use representation criteria such that each node comprises indications relating to a viewpoint of a scene and/or of an object which are coded by the data associated therewith. For example, known object search algorithms described by TELLER and SEQUIN in the article entitled "Visibility preprocessing for interactive walkthroughs" published in the journal SIGG-GRAPH, 91 which may be implemented to identify an object, coded in an image, and allocate a specific cell to the data relating to this object.

However, the method described in this document is peculiar to architectural environments, such as that of a building, the cells $C_k$ being predefined so as to comprise graphic images of like nature which relate to an image limited by vertical partitions such as walls. It does not therefore make it possible to fragment graphical data relating to a sector other than architecture. In a manner similar to the methods described above, it does not therefore make it possible to fragment multimedia data.

Patent DE19723102 from MEDIA DESIGN GES MULTIMEDIA & ONLINE PUB published on 12 November 1998 entitled *"Verfahren zum Darstellen von und navigieren in umfangreichen, Grafikelemente enlhaltenden Dateien"* discloses a method of fragmenting data which allocates cartographic data relating to a two-dimensional geographical location map to each cell $C_k$. This method of fragmentation has, in a manner similar to the methods described above, the drawback of depending on the nature of the fragmented data, namely of the two-dimensional cartographic data. Moreover, this method does not handle the case of redundant data which it is advisable to group into one and the same cell as described above.

Similarly, International Patent Application No. WO 0016307 of MICROSOFT entitled *"Method and apparatus for visualising and exploring large hierarchical structures"* disposes a method making it possible to allocate a navigation graph to data with a view to their fragmentation. However, such fragmentation can be applied only to data between which a prior hierarchy is established. Moreover, it does not make it possible to optimize the fragmentation of data as a function of their redundancy.

In a last example, Patent US 6014671 (IBM) published on 11 January 2000 entitled "*Interactive retrieval and catching of multidimensional data using view* elements" discloses a method making it possible to fragment a picture, in particular one taken from a satellite, and to generate a navigation graph according to spatial or temporal criteria. In a manner similar to the patent described above, this patent describes a fragmentation method relating to data of like natures which does not consider the case of redundant multimedia data.

The present invention remedies these drawbacks by making it possible to fragment multimedia data, that is to say redundant data of diverse natures, independently of their function and/or of their nature by means of their navigation graph.

More precisely, the invention relates to a method of fragmenting multimedia data associated with navigation nodes, a node controlling access to an associated data item and to at least one next node,

characterized in that,

- nodes and data associated with the latter in a successive manner are grouped into a temporary cell, comprising a starting node and the data associated with this node, each node grouped into the temporary cell following a node already induded in this temporary cell until the size of the temporary cell reaches a threshold value, then
- a pair of nodes which follow one another, of the temporary cell, minimizing a parameter dependent on the number of data common to the data associated with the two nodes of the pair is identified, a definitive cell being formed with the data grouped into the temporary cell until and including the data associated with the first node of the pair.

By virtue of such a method, multimedia data may be fragmented independently of their nature and of their application, this fragmentation being based on the use of the navigation nodes associated with the data.

Moreover, as a function of a criterion limiting the size of the temporary cell, it may be possible to determine a threshold in such a way as to generate cells whose size is adapted to a use such as the multiplexed transmission of data.

Furthermore, the use of a fragmentation parameter proportional to the number of data common to the data associated with the two nodes of the pair tends to form substantially independent cells, that is to say ones which can be processed separately, for example in tandem with their reception by a terminal.

Finally, the method in accordance with the invention generates cells which are optimized in relation to redundant data since redundant data will generally be included in one and the same cell, thus facilitating their processing as described above. Stated otherwise, the number of redundant cells generated by the method in accordance with the invention is generally less than the number of redundant cells generated by a known method of fragmentation.

In one embodiment, the parameter minimized by a pair of nodes in proportion to the number of data common to the data associated with the two nodes of the identified pair is determined.

In one embodiment, the threshold size of the temporary cell is determined as a function of the quantity of data grouped into this cell or as a function of the number of nodes grouped into this cell.

In one embodiment, use is made of the second node of the pair identified as starting node or another as yet ungrouped node to perform a fragmentation of data following this second node by repeating the operations performed during the first fragmentation.

In one embodiment, the parameter is determined in a manner inversely proportional to the quantity of data associated with one of the nodes of the identified pair.

In one embodiment, the parameter is determined in relation to the ratio between the number of nodes grouped into the temporary cell prior to the first node of the identified pair of nodes and the number of nodes in the temporary cell.

In one embodiment, the multimedia data comprise data relating to at least one of the following documents: an audio document, a video document, a program, a text document.

In this case, according to one embodiment, the video data correspond to at least one of the following elements: an image, a sequence of images, this or these images being two- or three-dimensional, a panorama, graphical data.

According to one embodiment, the images relating to viewpoints of scenes or of objects, neighbouring nodes correspond to viewpoints close to these scenes or to these objects.

The invention also relates to a method of fragmenting multimedia data which are not associated with a navigation graph. Such a method is characterized in that navigation nodes are associated with these data as a function of their nature and/or their function, a compression of these data is performed by eliminating the redundant data, the data retained being associated with the node relating to the data eliminated, and these data are fragmented according to a method of fragmentation in accordance with one of the embodiments of the fragmentation method described above.

In one embodiment, the data considered comprising video data relating to real images and to synthetic images, the navigation nodes are associated with the multimedia data by imposing access to the data relating to real images.

The invention also relates to a computer program product comprising program code instructions for executing the steps of the method of fragmenting multimedia data according to one of the embodiments of a fragmentation method as defined above, when the program is executed on a computer.

The invention also pertains to a device for fragmenting multimedia data associated with navigation nodes comprising:

- means for accessing a data item by means of a node associated with this data item,
- means for determining access to a second node, the so-called next node, from a first node, the so-called previous node,

    characterized in that it comprises:

- means for grouping, commencing with a predetermined starting node, into a temporary cell, data whose associated nodes follow one another until this cell reaches a threshold size,
- means for identifying a pair of nodes minimizing a parameter proportional to the number of data common to the data associated with the two nodes of the pair and
- means for forming a cell with the data associated with the first node of the pair and with the nodes previous to the latter node,

    said device being adapted to implement a method according to the invention.

In one embodiment, the device comprises means for determining the parameter in proportion to the number of data common to the data associated with the two nodes of the identified pair.

According to one embodiment, the device comprises means for determining the threshold size of the temporary cell as a function of the quantity of data grouped into this cell or as a function of the number of nodes grouped into this cell.

According to one embodiment, the device comprises means for using the second node of the pair identified as starting node for performing a fragmentation of data following this second node by repeating the operations performed during the first fragmentation.

In one embodiment, the device comprises means for determining the parameter in a manner inversely proportional to the quantity of data associated with one of the nodes of the identified pair.

According to one embodiment, the device comprises means for determining the parameter in proportion to the ratio between the number of nodes grouped into the temporary cell prior to the first node of the identified pair of nodes and the number of nodes in the temporary cell.

In one embodiment, the device comprises means for processing multimedia data relating to at least one of the following documents: an audio document, a video document, a program.

In this case, according to one embodiment, the device comprises means for processing video data corresponding to at least one of the following elements: an image, a sequence of images, this or these images being two- or three-dimensional.

According to one embodiment, the images relating to viewpoints of scenes or of objects, the device comprises means for processing nodes such that neighbouring nodes correspond to viewpoints close to these scenes or to these objects.

In one embodiment, the device for fragmenting multimedia data comprises means for associating navigation nodes with these data as a function of their nature and/or their function, for performing a compression of these data by eliminating the redundant data, the data retained being associated with the node relating to the data eliminated, and for fragmenting these data according to a method of fragmentation in accordance with one of the embodiments described above.

In this case, according to one embodiment, the data considered comprising video data relating to real images and to synthetic images, the device comprises means for associating the navigation nodes with the multimedia data so as to impose access to the data relating to real images.

Other characteristics and advantages of the invention will become apparent with the description, given hereinbelow without limitation, of certain of its modes of embodiment, while referring to the appended drawings, in which:

Figure 1, already described, represents cells comprising nodes associated with multimedia data in a known manner, and
Figure 2 represents cells comprising nodes associated with multimedia data fragmented in accordance with the invention.

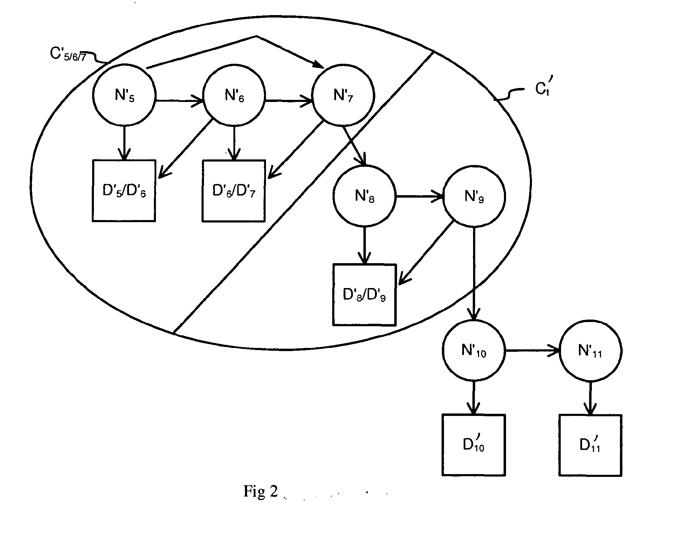

It is recalled that the invention makes it possible to fragment multimedia data $D_5'$, $D_6'$, $D_7'$ $D_8'$, $D_9'$, $D'_{10}$ and $D'_{11}$ (Figure 2) associated with a navigation graph comprising nodes $N_5'$, $N_6'$, $N_7'$ $N_8'$, $N_9'$, $N'_{10}$ and $N'_{11}$, each node $N_i'$ determining access to the data $D_i'$ associated therewith as described above.

However, it is possible that the multimedia data $D_i'$ to be fragmented are not associated, initially, with a navigation graph. In this case, it is necessary to generate this graph before fragmenting the multimedia data.

Such generation can be performed, for example, as a function of the document comprising the data $D_i'$. Thus, considering a multimedia document formed of pages comprising hypertext links and images, the navigation graph may be generated by allocating cells to each page of this document while the nodes of each cell correspond to the various data of each page.

If the multimedia data relate to images of scenes or of objects, the navigation graph may be composed of nodes relating to the various possible viewpoints of one and the same scene or of one and the same object represented.

In this case, it should be noted that numerous applications, such as video games, use multimedia data relating to real images in order to represent scenes. Therefore, it may be advantageous to generate the navigation graph in such a way as to limit access to these real data whose processing is simpler and faster than the processing of data relating to synthetic images.

In another example, if the data relate to a computer-aided design tool and comprise a hierarchization of the data as a function of the various elements or items used for the design, the navigation graph may be composed of nodes representative of this hierarchy.

In a general manner, if the data are organized according to a pre-existing structure, such as a grid or a file structure, a navigation graph may be obtained from this original structure.

When the multimedia data are associated with a navigation graph, a compression of these data is performed by means of this navigation graph. To do this, redundant data $D_i'$ and $D_n'$ are identified and processed by eliminating data, for example $D_n'$, and by associating the nodes $N_i'$ and $N_n'$ with the remaining data $D_i'$, referred to hereinbelow as $D_i'/D_n'$. In Figure 2, the nodes $N_9'$ and $N_8'$ are thus associated with data $D_8'/D_9'$. Likewise, the nodes $N_5$ and $N_e$ (respectively the nodes $N_e'$ and $N_7'$) are associated with data $D'_5/D_6'$ (respectively $D_e'/Dy'$).

Other forms of compression are possible. Thus, in the case of data relating to visual representations associated with a navigation graph, French Patent No. 9911671 entitled *"Procédé de construction d'un modele de scene 3D par analyse de sequence d'images"* [Method of constructing a 3D scene model by analysing image sequences] dated 17 September 1999 filed in the name of Thomson Multimedia, discloses a method for performing a compression of data relating to images in three dimensions and associated with a navigation graph.

For video databases containing descriptions based on three-dimensional images and with which a navigation graph is associated, the Patent FR9911671 already cited describes procedures for adding information relating to visibility to a navigation node so as to determine what information is necessary for the reconstruction of a viewpoint and needs to be associated with this node.

After this compression step, the multimedia data $D_5'$, $D_6'$, $D_7'$ $D_8'$, $D'_9$, $D'_{10}$ and $D'_{11}$ are fragmented into various data cells $C'_i$. In accordance with the invention, this fragmentation is performed by performing the following operations:

Firstly, a starting node $N_5'$ is determined such that from this node $N_5'$ the entire set of data $D'_5$, $D'_6$, $D'_7$, $D'_s$, $D'_9$, $D'_{10}$ and $D'_{11}$ to be fragmented is accessed, via this starting node, and nodes $N'_6$, $N'_7$, $N'_8$, $N'_9$, $N'_{10}$ and $N'_{11}$ following the latter are accessed.

It should be stressed that, as represented in Figure 2, the method of fragmentation in accordance with the invention is applied to data associated with a nonlinear navigation graph, the node $N'_5$ being associated with two nodes $N'_6$ and $N'_7$.

Thereafter, data $D'_5$, $D'_6$, $D'_7$, $D'_8$, $D'_9$ selected

successively are grouped into a temporary cell $C_t$ by considering, commencing with the starting node $N'_5$, the data associated with a node neighbouring the starting node $N'_5$ or a node whose associated data have been grouped into the temporary cell. For example, the data $D'_6$ whose node $N'_6$ neighbours the node $N'_5$ are grouped into the temporary cell $C_t$. Thereafter, the data $D'_7$ whose node $N'_7$ also neighbours the node $N'_5$ are grouped.

Likewise, the data $D'_8$ and $D'_9$ are grouped successively into the temporary cell $C_t$ by considering the nodes $N'_8$ and $N'_9$ associated with them to be neighbours of a node included in the temporary cell $C_t$. In this example, the nodes associated with the data are also grouped into the temporary cell.

Such a grouping is performed until the number $D'_5$, $D'_6$, $D'_7$, $D'_8$, $D'_9$ of data included in the temporary cell reaches a threshold value. In a variant, a limit size of the temporary cell is determined as a function of the number of nodes induced in this temporary cell.

When the temporary cell has reached the threshold size, a pair of successive nodes ($N'_7$; $N'_8$), that is to say of which a first node $N'_7$ precedes a second, next, node $N'_8$, which minimizes a parameter $T_i$ proportional to the number of data $D_c'$ common to the data ($D'_7$; $D'_8$) associated with the two nodes ($N'_7$; $N'_8$) of the identified pair, is identified. In this example, this parameter $T_i$ takes the following form:

$$T_i = ((T-(i-5))/T)^* r_i$$

Where T is the total number of nodes induced in the temporary cell $C'_t$, i-5 is the number of node(s) grouped into the temporary cell prior to the first node $N_7$ of the relevant pair of nodes and $r_i$ is equal to the ratio between $D_c'$, the number of data common to $D'_7$ and $D'_8$, and $D'_{max}$, the number of data associated with one of the nodes $N'_7$ and $N'_8$ of the pair.

Finally, a definitive cell $C'_{5/6/7}$ is formed comprising the data ($D'_5$, $D'_6$, $D'_7$) grouped successively into the temporary cell until the data associated with the first node $N'_7$ of the pair.

Subsequently, new definitive cells are formed by repeating the operations described above for which the second node ($N'_8$) of the identified pair is used as starting node.

In a variant of the invention, a node other than this node ($N'_8$) of the identified pair is used as starting node.

It is apparent that the method in accordance with the invention tends to limit the formation of redundant cells, since the limit of the definitive cells is obtained with the aid of a pair of nodes ($N'7$; $N'_8$) which minimizes a parameter $T_i$ proportional to the number of data common to two neighbouring nodes, that is to say a pair for which there is no or hardly any redundancy of data between cells.

Stated otherwise, the method in accordance with the invention tends to group the redundant data into definitive cells $C'_{5/6/7}$, thereby facilitating their processing as described above.

Subsequently, the fragmentation of the data associated with the second node $N_8$ of the pair ($N_7$; $N_8'$) identified and with the nodes ($N_9'$, $N_{10}'$, ... $N_z'$) following the latter node is performed by repeating the operations described above while taking the second node ($N'_8$) of the identified pair as starting node in order to form a new temporary cell.

As described above, in a variant of the invention, a node other than the second node of the identified pair is used as starting node for a new fragmentation.

## Claims

1. Method of fragmenting multimedia data ($D'_5$, $D'_6$, $D'_7$, ... $D'_{11}$,) associated with navigation nodes ($N'_5$, $N'_6$, $N'_7$, ..., $N'_{11}$), a node $N'_i$ controlling access to an associated data item ($D'_i$) and to at least one next node $N'_{i+1}$,
**characterized in that**,

   - nodes ($N'_6$, $N'_7$, $N'_8$, and $N'_9$) and data ($D'_6$, $D'_7$, $D'_8$, and $D'_9$) associated with the latter in a successive manner are grouped into a temporary cell ($C'_t$), comprising a starting node ($N'_5$) and the data ($D'_5$) associated with this node, each node $N'_{i+1}$ grouped into the temporary cell following a node $N'_i$ already included in this temporary cell until the size of the temporary cell reaches a threshold value, then
   - a pair of nodes ($N'_7$; $N'_8$) which follow one another, of the temporary cell ($C'_t$), minimizing a parameter ($T_i$) dependent on the number of data ($D'_c$) common to the data ($D'_7$; $D'_8$) associated with the two nodes ($N'_7$; $N'_8$) of the pair is identified, a definitive cell ($C'_5$, $C'_6$, $C'_7$) being formed with the data ($D'_5$, $D'_6$, $D'_7$) grouped into the temporary cell until and including the data ($D'_7$) associated with the first node ($N'_7$) of the pair.

2. Method according to Claim 1, **characterized in that** the parameter ($T_i$) minimized by a pair of nodes in proportion to the number of data ($D'_c$) common to the data ($D'_7$; $D'_8$) associated with the two nodes ($N'_7$; $N'_8$) of the identified pair is determined.

3. Method according to Claim 1 or 2, **characterized in that** the threshold size of the temporary cell is determined as a function of the quantity of data grouped into this cell or as a function of the number of nodes grouped into this cell.

4. Method according to one of the preceding claims, **characterized in that** use is made of the second

node N'$_{i+1}$ of the pair identified or another as yet ungrouped node as starting node to perform a fragmentation of data (D'$_i$) following this starting node by repeating the operations performed during the first fragmentation.

5. Method according to Claim 1, 2 or 3, **characterized in that** the parameter (T$_i$) is determined in a manner inversely proportional to the quantity of data (D'$_7$; D'$_8$) associated with one of the nodes (N'$_7$;N'$_8$) of the identified pair.

6. Method according to one of the preceding claims, **characterized in that** the parameter (T$_i$) is determined in relation to the ratio between the number (i-5) of nodes grouped into the temporary cell prior to the first node (N'$_7$) of the identified pair of nodes (N'$_7$; N'$_8$) and the number of nodes (T) in the temporary cell.

7. Method according to one of the preceding claims, **characterized in that** the multimedia data comprise data relating to at least one of the following documents: an audio document, a video document, a program, a text document.

8. Method according to Claim 7, **characterized in that** the video data correspond to at least one of the following elements: an image, a sequence of images, this or these images being two- or three-dimensional, a panorama, graphical data

9. Method according to Claim 8, **characterized in that**, the images relating to viewpoints of scenes or of objects, neighbouring nodes correspond to viewpoints dose to these scenes or to these objects.

10. Method of fragmenting multimedia data, **characterized in that** navigation nodes are associated with these data as a function of their nature and/or their function, a compression of these data is performed by eliminating the redundant data, the data retained being associated with the node relating to the data eliminated, and these data are fragmented according to a method of fragmentation in accordance with one of the preceding claims.

11. Method according to Claim 9, **characterized in that**, the data considered comprising video data relating to real images and to synthetic images, the navigation nodes are associated with the multimedia data by imposing access to the data relating to real images.

12. Computer program product comprising program code instructions for executing the steps of the method of fragmenting multimedia data according to one of Claims 1 to 11, when the program is executed on a computer.

13. Device for fragmenting multimedia data associated with navigation nodes comprising:

- means for accessing a data item by means of a node associated with this data item,
- means for determining access to a second node, the so-called next node, from a first node, the so-called previous node,
**characterized in that** it comprises:
- means for grouping, commencing with a predetermined starting node, into a temporary cell, data whose associated nodes follow one another until this cell reaches a threshold size,
- means for identifying a pair of nodes minimizing a parameter proportional to the number of data common to the data associated with the two nodes of the pair and
- means for forming a cell with the data associated with the first node of the pair and with the nodes previous to the latter node,

said device being adapted to implement a method according to one of claims 1 to 11.

**Patentansprüche**

1. Verfahren zum Fragmentieren von Multimediadaten (D'$_5$, D'$_6$, D'$_7$, ... , D'$_{11}$), die Navigationsknoten (N'$_5$, N'$_6$, N'$_7$, ..., , N'$_{11}$) zugeordnet sind, wobei ein Knoten N'$_i$ den Zugriff auf ein zugeordnetes Datenfeld (D'$_i$) und auf mindestens einen nächsten Knoten N'$_{i+1}$ steuert, **dadurch gekennzeichnet, dass**

- Knoten (N'$_6$, N'$_7$, N'$_8$ und N'$_9$) und Daten (D'$_6$, D'$_7$, D'$_8$ und D'$_9$), die den Letzteren in aufeinanderfolgender Weise zugeordnet sind, in einer temporären Zelle (C'$_t$) gruppiert werden, die einen Anfangsknoten (N'$_5$) und die diesem Knoten zugeordneten Daten (D'$_5$) umfasst, wobei jeder Knoten N'$_{i+1}$ in die temporäre Zelle auf einen bereits in dieser temporären Zelle enthaltenen Knoten N'$_i$ folgend gruppiert wird, bis die Größe der temporären Zelle einen Schwellenwert erreicht, woraufhin
- ein Paar aufeinanderfolgender Knoten (N'$_7$; N'$_8$) der temporären Zelle (C'$_t$) identifiziert wird, das einen Parameter (T$_i$) minimiert, der von der Anzahl von Daten (D'$_c$), die mit den den zwei Knoten (N'$_7$; N'$_8$) des Paars zugeordneten Daten (D'$_7$; D'$_8$) gemeinsam sind, abhängt, wobei mit den Daten (D'$_5$, D'$_6$, D'$_7$), die in der temporären Zelle gruppiert sind, bis einschließlich zu den Daten (D'$_7$), die dem ersten Knoten (N'$_7$) des Paars zugeordnet sind, eine endgültige Zel-

le (C'$_5$, C'$_6$, C'$_7$) gebildet wird.

**2.** Verfahren nach Anspruch 1, **dadurch gekennzeichnet, dass** der Parameter (T$_i$), der durch ein Paar von Knoten minimiert wird, proportional zu der Anzahl von Daten (D'$_c$) bestimmt wird, die gemeinsam mit den Daten (D'$_7$; D'$_8$) sind, die den zwei Knoten (N'$_7$; N'$_8$) des identifizierten Paars zugeordnet sind.

**3.** Verfahren nach Anspruch 1 oder 2, **dadurch gekennzeichnet, dass** die Schwellengröße der temporären Zelle als Funktion der Menge von Daten, die in dieser Zelle gruppiert sind, oder als Funktion der Anzahl von Knoten, die in dieser Zelle gruppiert sind, bestimmt wird.

**4.** Verfahren nach einem der vorhergehenden Ansprüche, **dadurch gekennzeichnet, dass** der zweite Knoten (N'$_{i+1}$) des identifizierten Paars oder ein anderer, bisher noch ungruppierter Knoten als Anfangsknoten zum Ausführen einer Fragmentierung von Daten (D'$_i$), die auf diesen Anfangsknoten folgen, durch Wiederholen der während der ersten Fragmentierung ausgeführten Operationen verwendet wird.

**5.** Verfahren nach Anspruch 1, 2 oder 3, **dadurch gekennzeichnet, dass** der Parameter (T$_i$) in umgekehrt proportionaler Weise zu der Menge von Daten (D'$_7$; D'$_8$), die einem der Knoten (N'$_7$; N'$_8$) des identifizierten Paars zugeordnet sind, bestimmt wird.

**6.** Verfahren nach einem der vorhergehenden Ansprüche, **dadurch gekennzeichnet, dass** der Parameter (T$_i$) in Bezug auf das Verhältnis zwischen der Anzahl (i-5) von in der temporären Zelle vor dem ersten Knoten (N'$_7$) des identifizierten Paars von Knoten (N'$_7$; N'$_8$) gruppierten Knoten und der Anzahl der Knoten (T) in der temporären Zelle bestimmt wird.

**7.** Verfahren nach einem der vorhergehenden Ansprüche, **dadurch gekennzeichnet, dass** die Multimediadaten Daten umfassen, die sich auf mindestens eines der folgenden Dokumente beziehen: ein Audiodokument, ein Videodokument, ein Programm, ein Textdokument.

**8.** Verfahren nach Anspruch 7, **dadurch gekennzeichnet, dass** die Videodaten mindestens einem der folgenden Elemente entsprechen: einem Bild, einer Folge von Bildern, wobei dieses Bild oder diese Bilder zwei- oder dreidimensional sind, einem Panorama, Graphikdaten.

**9.** Verfahren nach Anspruch 8, **dadurch gekennzeichnet, dass** sich die Bilder auf Ansichtspunkte von Szenen oder von Objekten beziehen, wobei Nachbarknoten Ansichtspunkten in der Nähe dieser Szenen oder dieser Objekte entsprechen.

**10.** Verfahren zum Fragmentieren von Multimediadaten, **dadurch gekennzeichnet, dass** die Navigationsknoten diesen Daten als Funktion ihres Wesens und/oder ihrer Funktion zugeordnet werden, wobei durch Beseitigen der redundanten Daten eine Kompression dieser Daten ausgeführt wird, wobei die behaltenen Daten dem Knoten zugeordnet werden, der sich auf die beseitigten Daten bezieht, und diese Daten in Übereinstimmung mit einem Verfahren zur Fragmentierung in Übereinstimmung mit einem der vorhergehenden Ansprüche fragmentiert werden.

**11.** Verfahren nach Anspruch 9, **dadurch gekennzeichnet, dass** die betrachteten Daten Videodaten umfassen, die sich auf Echtbilder und auf synthetische Bilder beziehen, wobei die Navigationsknoten den Multimediadaten durch Erzwingen eines Zugriffs auf die Daten, die sich auf Echtbilder beziehen, zugeordnet werden.

**12.** Computerprogrammprodukt, das Programmcodeanweisungen umfasst, um die Schritte des Verfahrens zum Fragmentieren von Multimediadaten nach einem der Ansprüche 1 bis 11 auszuführen, wenn das Programm auf einem Computer ausgeführt wird.

**13.** Vorrichtung zum Fragmentieren von Multimediadaten, die Navigationsknoten zugeordnet sind, wobei die Vorrichtung umfasst:

    - ein Mittel zum Zugreifen auf ein Datenfeld mittels eines diesem Datenfeld zugeordneten Knotens,
    - ein Mittel zum Bestimmen des Zugriffs auf einen zweiten Knoten, den sogenannten nächsten Knoten, von einem ersten Knoten, dem sogenannten vorhergehenden Knoten,
    **dadurch gekennzeichnet, dass** die Vorrichtung umfasst:
    - ein Mittel zum Gruppieren von Daten, deren zugeordnete Knoten aufeinanderfolgen, beginnend mit einem vorgegebenen Anfangsknoten, in einer temporären Zelle, bis diese Zelle eine Schwellengröße erreicht,
    - ein Mittel zum Identifizieren eines Paars von Knoten, das einen Parameter proportional zu der Anzahl gemeinsamer Daten mit den Daten, die den zwei Knoten des Paars zugeordnet sind, minimiert, und
    - ein Mittel zum Bilden einer Zelle mit den Daten, die dem ersten Knoten des Paars und den Knoten vor dem letzteren Knoten zugeordneten sind,

wobei die Vorrichtung zum Implementieren eines Verfahrens nach einem der Ansprüche 1 bis 11 ausgelegt ist.

## Revendications

1. Procédé de fragmentation de données ($D'_5$, $D'_6$, $D'_7$, ... $D'_{11}$,) multimédia associées à des noeuds ($N'_5$, $N'_6$, $N'_7$, ..., $N'_{11}$) de navigation, un noeud $N'_i$ contrôlant l'accès à une donnée ($D'_i$) associée et à au moins un noeud $N'_{i+1}$ suivant, **caractérisé en ce que**,

   - On groupe dans une cellule ($C'_t$) temporaire, comprenant un noeud ($N'_5$) de départ et les données ($D'_5$) associées à ce noeud, des noeuds ($N'_6$, $N'_7$, $N'_8$, et $N'_9$) et des données ($D'_6$, $D'_7$, $D'_8$, et $D'_9$) associées à ces derniers de façon successive, chaque noeud $N'_{i+1}$ regroupé dans la cellule temporaire suivant un noeud $N'_i$ déjà compris dans cette cellule temporaire jusqu'à ce que la taille de la cellule temporaire atteigne une valeur seuil, puis
   - On identifie une paire de noeuds ($N'_7$;$N'_8$) qui se suivent, de la cellule temporaire ($C'_t$), minimisant un paramètre ($T_i$) fonction du nombre de données ($D'_c$) communes entre les données associées ($D'_7$;$D'_8$) aux deux noeuds ($N'_7$;$N'_8$) de la paire, une cellule ($C'_5$, $C'_6$, $C'_7$) définitive étant formée avec les données ($D'_5$, $D'_6$, $D'_7$) groupées dans la cellule temporaire jusqu'aux et comprenant les données ($D'_7$) associées au premier noeud ($N'_7$) de la paire.

2. Procédé selon la revendication 1 **caractérisé en ce qu'**on détermine le paramètre ($T_i$) minimisé par une paire de noeuds proportionnellement au nombre de données ($D'_c$) communes entre les données associées ($D'_7$;$D'_8$) aux deux noeuds ($N'_7$;$N'_8$) de la paire identifiée.

3. Procédé selon la revendication 1 ou 2 **caractérisé en ce qu'**on détermine la taille seuil de la cellule temporaire en fonction de la quantité de données regroupées dans cette cellule ou en fonction du nombre de noeuds regroupés dans cette cellule.

4. Procédé selon l'une des revendications précédentes **caractérisé en ce qu'**on utilise le deuxième noeud $N'_{i+1}$ de la paire identifiée ou un autre noeud pas encore groupé comme noeud de départ pour effectuer une fragmentation de données ($D'_i$) suivant ce noeud de départ en réitérant les opérations effectuées lors de la première fragmentation.

5. Procédé selon la revendication 1, 2 ou 3 **caractérisé en ce qu'**on détermine le paramètre ($T_i$) de façon inversement proportionnelle à la quantité de données ($D'_7$;$D'_8$) associées à un des noeuds ($N'_7$;$N'_8$) de la paire identifiée.

6. Procédé selon l'une des revendications précédentes **caractérisé en ce qu'**on détermine le paramètre ($T_i$) par rapport au rapport entre le nombre (i-5) de noeuds regroupés dans la cellule temporaire préalablement au premier noeud ($N'_7$) de la paire de noeuds ($N'_7$;$N'_8$) identifiée et le nombre de noeuds (T) dans la cellule temporaire.

7. Procédé selon l'une des revendications précédentes **caractérisé en ce que** les données multimédia comprennent des données relatives à au moins un des documents suivants : un document audio, un document vidéo, un programme, un document texte.

8. Procédé selon la revendication 7 **caractérisé en ce que** les données vidéo correspondent à au moins un des éléments suivants : une image, une séquence d'images, cette ou ces images étant à deux ou trois dimensions, un panorama, des données graphiques.

9. Procédé selon la revendication 8 **caractérisé en ce que**, les images étant relatives à des points de vues de scènes ou d'objets, des noeuds voisins correspondent à des points de vue proches de ces scènes ou de ces objets.

10. Procédé de fragmentation de données multimédia **caractérisé en ce qu'**on associe des noeuds de navigation à ces données en fonction de leur nature et/ou de leur fonction, on effectue une compression de ces données en éliminant les données redondantes, les données maintenues étant associées au noeud relatif aux données éliminées, et on fragmente ces données selon un procédé de fragmentation conforme à l'une des revendications précédentes.

11. Procédé selon la revendication 9 **caractérisé en ce que**, les données considérées comportant des données vidéo relatives à des images réelles et à des images de synthèse, on associe les noeuds de navigation aux données multimédia en imposant l'accès aux données relatives à des images réelles.

12. Produit programme d'ordinateur comprenant des instructions de codes de programme pour l'exécution des étapes du procédé de fragmentation de données multimédia selon l'une des revendications 1 à 11, lorsque le programme est exécuté sur un ordinateur.

13. Dispositif de fragmentation de données multimédia associées à des noeuds de navigation comportant :

- des moyens pour accéder à une donnée au moyen d'un noeud associé à cette donnée,
- des moyens pour déterminer l'accès à un deuxième noeud, dit noeud suivant, à partir d'un premier noeud, dit noeud précédent, **caractérisé en ce qu'**il comporte :
- des moyens pour grouper, à partir d'un noeud de départ prédéterminé, en une cellule temporaire des données dont les noeuds associés se suivent jusqu'à ce que cette cellule atteigne une taille seuil,
- des moyens pour identifier une paire de noeuds minimisant un paramètre proportionnel au nombre de données communes entre les données associées aux deux noeuds de la paire et
- des moyens pour former une cellule avec les données associées au premier noeud de la paire et aux noeuds précédant ce dernier,

ledit dispositif étant adapté à mettre en oeuvre un procédé selon l'une des revendications 1 à 11.

Fig 1

Fig 2

**EP 1 367 831 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- DE 19723102
- WO 0016307 A
- US 6014671 A
- FR 9911671

### Non-patent literature cited in the description

- **TELLER ; SEQUIN.** Visibility preprocessing for interactive walkthroughs. *journal SIGG-GRAPH,* vol. 91